# EUROPÄISCHE PATENTSCHRIFT

(11) **EP 2 560 778 B1**
(45) Veröffentlichungstag und Bekanntmachung des Hinweises auf die Patenterteilung: **06.09.2017**
(21) Anmeldenummer: 11714979.9
(22) Anmeldetag: 15.04.2011
(51) Int. Cl.: B23B 51/04

(54) **BOHRKOPF FÜR EIN TIEFBOHRWERKZEUG ZUM BTA-TIEFBOHREN UND TIEFBOHRWERKZEUG**
DRILL HEAD FOR A DEEP HOLE DRILLING TOOL FOR BTA DEEP HOLE DRILLING, AND DEEP HOLE DRILLING TOOL
TÊTE DE FORAGE POUR UN OUTIL DE FORAGE PROFOND DESTINÉ AU FORAGE PROFOND BTA ET OUTIL DE FORAGE PROFOND

(30) Priorität: 23.04.2010 DE 102010018959
(43) Veröffentlichungstag der Anmeldung: 27.02.2013
(73) Patentinhaber: TBT Tiefbohrtechnik GmbH + Co, 72581 Dettingen (DE)
(72) Erfinder: RANDECKER, Hermann, 72581 Dettingen (DE); BERNT, Andreas, 72639 Neuffen-Kappishäusern (DE)
(74) Vertreter: Patentanwälte Ruff, Wilhelm, Beier, Dauster & Partner mbB
(86) Internationale Anmeldenummer: PCT/EP2011/055987
(87) Internationale Veröffentlichungsnummer: WO 2011/131575

(56) Entgegenhaltungen:
- EP-A1- 2 090 390
- WO-A1-00/78489
- DE-A1- 4 239 257
- JP-A- 63 102 815
- JP-A- 2003 211 311
- US-A- 4 954 024

## Beschreibung

### HINTERGRUND DER ERFINDUNG

Die Erfindung betrifft einen Bohrkopf für ein Tiefbohrwerkzeug zum BTA/STS- oder Ejektor-Tiefbohren gemäß dem Oberbegriff von Anspruch 1 sowie ein Tiefbohrwerkzeug gemäß dem Oberbegriff von Anspruch 12.

Tiefbohren ist ein spezielles Bohrverfahren, das vor allem zur Herstellung von Bohrungen mit einem Durchmesser von 1 mm bis 1.500 mm bei einer Tiefe von mehr als dem Dreifachen des Durchmessers eingesetzt wird, wobei auch sehr tiefe Bohrungen mit einem Tiefe/Durchmesser-Verhältnis größer 200 hergestellt werden können. Ein Tiefbohrwerkzeug besteht üblicherweise aus einem Bohrerschaft, der bei Tiefbohrwerkzeugen auch als Bohrrohr bezeichnet wird und wie eine Verlängerung wirkt, und einem am vorderen Ende des Bohrerschaftes angebrachten Bohrkopf, an dem eine oder mehrere Schneiden angeordnet sind.

Für das Tiefbohren charakteristisch ist eine kontinuierliche Kühlschmierstoffzufuhr unter Druck und eine stetige Spanabfuhr ohne Ausspanhübe. Dies bedeutet, dass auch tiefe Bohrungen durch das Tiefbohrverfahren in einem Durchgang gefertigt werden können, und der Bohrer nicht zwischendurch zum Entspänen aus der Bohrung entfernt werden muss. Man unterscheidet im wesentlichen drei Tiefbohrverfahren, nämlich das in dieser Anmeldung nicht weiter interessierende Einlippen-Tiefbohren, das BTA-Tiefbohren, welches auch als STS ("**S**ingle Tube **S**ystem") - Tiefbohren bezeichnet wird, und das Ejektor-Tiefbohren, das auch als Tiefbohren mit Zweirohr-System bekannt ist. Diese Verfahren unterscheiden sich in den verwendeten Tiefbohrwerkzeugen, im Kühlschmierstofffluss sowie im Spänefluss.

Beim BTA- bzw. STS-Tiefbohren erfolgt die Kühlschmierstoffzufuhr von außen über eine spezielle Kühlschmierstoffzuführeinrichtung. Dabei wird der Kühlschmierstoff unter Druck in einen Ringraum zwischen der Außenseite des Bohrwerkzeugs und der Innenwand der Bohrung gefördert. Die Kühlschmierstoff- und Spänerückführung erfolgt durch einen im Inneren des Tiefbohrwerkzeugs vorgesehen Hohlraumkanal.

Das Ejektor-Tiefbohren ist eine Variante des BTA-Tiefbohrens. Beim Ejektor-Tiefbohren wird ein Bohrrohr mit zwei konzentrisch angeordneten Rohren, einem Außenrohr und einem Innenrohr, verwendet. Die Zufuhr des Kühlschmierstoffes erfolgt durch eine Kühlschmierstoffzuführeinrichtung in einen Ringraum zwischen dem Außenrohr und dem Innenrohr. Der Kühlschmierstoff fließt im Ringraum das Bohrrohr entlang und tritt erst in der Bohrung vorne am Bohrkopf seitlich nach außen aus und umspült den Bohrkopf von außen. Anschließend fließt der Kühlschmierstoff gemeinsam mit den Spänen zurück, und zwar im Innenrohr, das den Hohlraumkanal bildet.

Zum BTA-Tiefbohren sind spezielle Tiefbohrwerkzeuge erforderlich, die sich in ihrem Aufbau von einem herkömmlichen Bohrwerkzeug, wie beispielsweise einem Spiralbohrer, aber auch von Einlippen-Tiefbohrwerkzeugen, signifikant unterscheiden.

BTA-Tiefbohrwerkzeuge weisen einen Bohrkopf mit einem um eine Drehachse drehbaren Bohrkopfkörper auf, der an seinem einen Ende einen Bohrbereich mit einer Bohrseite hat. Im Inneren ist ein Hohlraumkanal für die Späne- und Kühlschmierstoffrückführung vorgesehen, der zu einem entsprechenden Kanal im Bohrrohr führt. An der Bohrseite des Bohrkopfkörpers sind eine oder mehrere unsymmetrisch zur Drehachse angeordnete Schneiden vorgesehen.

Die Schneide ist dabei der Teil des Bohrwerkzeuges, der als erster in das zu zerspanende Werkzeug eindringt und eine mechanische Trennwirkung herbeiführt. Es sind sowohl auswechselbare Schneiden, die üblicherweise zur Befestigung am Bohrkopfkörper geklemmt oder geschraubt sind, als auch fest mit dem Bohrkopfkörper verbundene Schneiden bekannt. Insbesondere bei kleinen Bohrkopfdurchmessern werden die Schneideinsätze durch Löten befestigt. Die Schneide ist keilförmig ausgebildet und bildet einen Schneidkeil zur Erzeugung hoher Druckkräfte aus den eingebrachten Kräften und weist üblicherweise eine Hauptschneide und eine Nebenschneide auf. Dabei ist die Hauptschneide der Teil der Schneide, an dem der größte Anteil der Zerspanungsarbeit geleistet wird. Der Bereich, wo Haupt- und Nebenschneide zusammentreffen, wird als Schneidenecke bezeichnet, die in der Praxis mit einem Radius versehen ist. Hauptschneide und Nebenschneide bzw. ihre Kanten spannen eine Spanfläche auf, wobei die Spanfläche die Fläche ist, auf welcher der durch eine Relativbewegung zwischen Werkzeug und Werkstück entstandene Span abgleitet. Die Kante der Schneide, an der die Spanfläche und die Freifläche aneinander angrenzen, wird als Schneidenkante bezeichnet.

Beim Bohren erfolgt das Spanen mit einer kreisförmigen Schnittbewegung, also einer kreisförmigen Relativbewegung zwischen Werkzeug und Werkstück, wobei eine Vorschubbewegung in Richtung der Drehachse erfolgt. Die Schneiden sind bei BTA-Tiefbohrwerkzeugen jeweils mit ihrer Spanfläche an eine Spänesammelöffnung angrenzend angeordnet. Die Späne werden in dieser Öffnung gesammelt und gemeinsam mit dem Kühlschmierstoff von dieser Öffnung zu dem Hohlraumkanal im Inneren gefördert und durch diesen rückgeführt bzw. abgeführt.

Tiefbohrwerkzeuge sind dazu ausgebildet, sich in der Bohrung selbst zu führen. Dazu haben sie Führungsleisten oder Stützleisten, die im Bohrbereich an der Außenseite des Bohrkopfkörpers parallel zur Drehachse angeordnet sind und jeweils eine äußere Anlagezone aufweisen. Die äußeren Anlagezonen der Führungsleisten, die auch als Kontaktzonen bezeichnet werden, sind für ein Anliegen an der Innenwand der Bohrung vorgesehen und stellen zusammen mit der Nebenschneide bzw. zumindest einem in einer Vorschubrichtung vordersten Teil der Nebenschneide die Führung des Bohrkopfes in der Bohrung sicher.

Die bekannten Bohrköpfe haben Nebenschneiden und Führungsleisten mit einem speziellen Schliff, durch welchen die Reibungskräfte zwischen der Nebenschneide bzw. den Führungsleisten und der Innenwand der Bohrung minimiert werden sollen. Die Nebenschneide weist in einem direkt an die Nebenschneidenkante angrenzenden Bereich eine sogenannte Rundschlifffase auf, die mit einem kleineren Radius als der Bohrungsradius angeschliffen ist. Die Rundschlifffase und/oder die Führungsleisten können auch einen Hinterschliff aufweisen, so dass sie den Bohrkopf nur in seinem vorderen Bereich führen und von der Bohrseite entgegengesetzt zur Vorschubrichtung konisch nach innen ausgebildet sind. Wenn zwei Führungsleisten vorhanden sind, ergibt sich aus diesen und der Rundschlifffase eine Dreipunktanlage.

Aus dem Stand der Technik bekannte BTA-Tiefbohrköpfe weisen zwei oder mehr Führungsleisten bzw. weitere Stütz- und/oder Hilfsleisten auf. Dabei ist eine der Führungsleisten zur Aufnahme tangential auf die Schneide wirkender Kräfte ausgebildet. Diese Führungsleiste wird üblicherweise als erste Führungsleiste bezeichnet. Sie ist normalweise um einen in Umfangsrichtung von der Schneidenecke aus gemessenen Führungsleistenwinkel von ca. 85° bis 90° zur Schneidenecke versetzt in einer von der Spanfläche abgewandten Umfangshälfte des Bohrkopfkörpers angeordnet. Eine andere Führungsleiste ist zur Aufnahme radial auf die Schneide wirkender Kräfte diametral von der Schneidenecke angeordnet. Diese wird als zweite Führungsleiste bezeichnet.

Mittels des vorgenannten BTA-Tiefbohrverfahrens können die unterschiedlichsten Bohrungsgeometrien in den verschiedensten Werkstoffen hergestellt werden. Es hat sich jedoch herausgestellt, dass die bekannten BTA-Tiefbohrwerkzeuge bzw. die Bohrköpfe dieser BTA-Tiefbohrwerkzeuge beim Zerspanen einiger Werkstoffe im Vergleich zu anderen Werkstoffen keine ausreichenden Standzeiten aufweisen und/oder keine ausreichende Bohrungsqualität liefern. Insbesondere die Rundschlifffase an der Nebenschneide, welche mit den zwei Führungsleisten die Dreipunktanlage bildet, wird beim BTA-Tiefbohren dieser Werkstoffe stark belastet, so dass die Schneide frühzeitig ausgewechselt werden muss, was sich nachteilig auf die Kosten auswirkt. Geringe Standzeiten bedeuten einen häufigen Werkzeugwechsel und damit erhöhte Werkzeuginvestitionen sowie Produktivitätsverluste. Des Weiteren hat sich gezeigt, dass die bekannten BTA-Tiefbohrwerkzeuge bei der Bearbeitung einiger Werkstoffe zum Schwingen während des Tiefbohrvorgangs neigen, was sich ebenfalls negativ auf die Bohrungsqualität auswirken kann.

Die EP 2 090 390 A1 zeigt einen Bohrkopf gemäß dem Oberbegriff des Patentanspruchs 1 für ein BTA-STS-Tiefbohrkopf bei dem der Führungsleistenwinkel zwischen der Schneidenecke und der ersten Führungsleiste ca. 75° beträgt.

Die DE 42 39 257 A1 beschreibt einen Vollbohrer mit einem Grundkörper, einer stirnseitig offenen, eine Messerplatte aufnehmenden Nut, einer die Messerplatte haltenden Spannvorrichtung und mit in die Umfangsfläche des Grundkörpers eingesetzten Führungsleisten. Die Messerplatte überragt die Umfangsfläche des Grundkörpers mit einer seitlichen Schneidkante. Dieser Schneidkante gegenüberliegend ist eine erste Führungsleiste angeordnet. Die Breite der Messerplatte ist so gewählt, dass sie sich zur Ausbildung zweier stirnseitig wirkender Schneiden über die mit der Mittelachse zusammenfallende Drehachse des Vollbohrers hinweg erstreckt.

In Drehrichtung gesehen nacheilend zur seitlichen Schneidkante ist eine zweite Führungsleiste angeordnet, während eine dritte Führungsleiste der ersten Führungsleiste in Drehrichtung gesehen nacheilend angeordnet ist. Der Umfangswinkel zwischen der seitlichen Schneidkante und der ihr nacheilenden zweiten Führungsleiste liegt vorzugsweise zwischen 20° und 60°.

### AUFGABE UND LÖSUNG

Es ist eine Aufgabe der Erfindung, einen gattungsgemäßen BTA/STS- oder Ejektor-Tiefbohrkopf bereitzustellen, der eine hohe Werkzeugstandzeit beim Zerspanen unterschiedlichster Werkstoffe ermöglicht und der weniger zu Schwingungen während des Bohrvorganges neigt. Ferner ist es eine Aufgabe der Erfindung, ein entsprechendes BTA-Tiefbohrwerkzeug bereitzustellen.

Zur Lösung dieser und anderer Aufgaben stellt die Erfindung einen Bohrkopf für ein Tiefbohrwerkzeug zum BTA/STS- oder Ejektor-Tiefbohren mit den Merkmalen von Anspruch 1 und ein Tiefbohrwerkzeug mit den Merkmalen von Anspruch 12 bereit. Vorteilhafte Weiterbildungen sind in den abhängigen Ansprüchen angegeben. Der Wortlaut sämtlicher Ansprüche wird durch Bezugnahme zum Inhalt der Beschreibung gemacht.

Ein Bohrkopf gemäß der Erfindung ist dadurch gekennzeichnet, dass der Führungsleistenwinkel, um den die erste Führungsleiste zur Schneidenecke in Umfangsrichtung versetzt angeordnet ist, weniger als 70° beträgt. Ein Tiefbohrwerkzeug mit einem Bohrkopf und einem Bohrrohr gemäß der Erfindung ist gekennzeichnet durch einen vorgenannten, erfindungsgemäßen Bohrkopf.

Der Führungsleistenwinkel ist dabei der in Umfangsrichtung des Bohrkopfes gemessene Winkel, der von einer ersten, durch die Schneidenecke und die Drehachse radial verlaufenden Geraden und einer zweiten, ebenfalls durch die Drehachse radial verlaufenden Geraden gebildet wird, wobei die zweite Gerade orthogonal zu einer Tangente verläuft, welche ihren Berührpunkt im theoretischen Anlagepunkt der äußeren Anlagezone der ersten Führungsleiste an der Innenwand der Bohrung hat.
Während des Zerspanvorgangs wirken unterschiedliche Kräfte und Momente auf die Schneide und damit auf den Bohrkopf. Die betragsmäßig größten Kräfte sind zum einen Zerspankräfte an der Schneide und Reibkräfte, die insbesondere an den Führungsleisten und der Rundschlifffase auftreten. Die Zerspankraft ist die Kraft, die auf die Schneide bzw. den Schneidkeil wirkt. Sie besteht aus einer Schnittkraft (in Schnittrichtung) und einer Vorschubkraft (in Vorschubrichtung), wobei diese Kräfte senkrecht zueinander wirken. Die Schnittkraft ist dabei unter anderem abhängig von dem zu zerspanenden Werkstoff und von der Schneidengeometrie. Senkrecht zu der Resultierenden aus der Schnittkraft und der Vorschubkraft wirkt eine Passivkraft. Die Passivkraft wird im wesentlichen durch den Anstellwinkel der Schneide in Vorschubrichtung bestimmt. Die Passivkraft trägt nicht zur Spanentstehung bei, sondern drängt das Werkzeug aus dem Werkstoff heraus.

Detaillierte Untersuchungen haben gezeigt, dass bei BTA-Tiefbohrwerkzeugen aus dem Stand der Technik bedingt durch die unsymmetrische Anordnung der Schneide und ihre zum einen radial und zum anderen in Vorschubrichtung üblicherweise mit einem Anstellwinkel verlaufende Hauptschneidenkante durch die Schnittkraft ein Moment um die erste Führungsleiste um eine zur Drehachse parallelen Achse erzeugt wird. Dieses Moment führt zu einem Verkippen bzw. Verdrehen des Bohrwerkzeugs bzw. des vorderen Teils des Bohrkopfes um die erste Führungsleiste und es entsteht an der Nebenschneide bzw. der Rundschlifffase eine von ihrem Betrag her nicht zu vernachlässigende, radial nach innen wirkende Passivkraft als Abstützkraft, weil der Bohrkopf mit der Nebenschneide bzw. der Rundschlifffase gegen die Innenwand der Bohrung gedrückt wird. Je höher die Passivkraft an der Nebenschneide bzw. der Rundschlifffase ist, desto größer ist die Reibkraft zwischen der Nebenschneide bzw. der Rundschlifffase und der Innenwand der Bohrung und damit der Verschleiß an der Nebenschneide bzw. der Rundschlifffase.
Wenn der Führungsleistenwinkel auf einen Winkel kleiner 70° reduziert wird, so wird der wirksame Hebelarm, mit dem die Schnittkraft ein Moment um die erste Führungsleiste erzeugt, reduziert. Ein reduziertes Kippmoment führt entsprechend zu reduzierten Abstützkräften und somit zu einer verminderten Reibung im Bereich der Nebenschneidenkante, was sich besonders vorteilhaft auf die Standzeit der Schneide auswirkt.

Außerdem hat sich herausgestellt, dass durch die deutlich reduzierte Passivkraft im Bereich der Nebenschneide die Neigung zu Schwingungen während des Bohrvorgangs reduziert werden kann, was in diesen Fällen zu einer deutlich verbesserten Bohrungsqualität führt.

Die zweite Führungsleiste ist diametral zur Schneidenecke angeordnet. Der Begriff "diametral" bedeutet in dieser Anmeldung, dass der entsprechende Umfangswinkel zur Schneidenkante etwa 180° beträgt. Kleine Abweichungen im Bereich von ± 10° bis ± 15° zur 180°-Anordnung werden hier ebenfalls noch als "diametral" bezeichnet.

In einer bevorzugten Ausgestaltung der Erfindung beträgt der Führungsleistenwinkel, um den die erste Führungsleiste zur Schneidenecke in Umfangsrichtung versetzt angeordnet ist, 30° bis 70°. Vorzugsweise beträgt dieser Winkel 40° bis 60°, insbesondere 45° bis 55°. Es hat sich für die meisten Werkstoffe als besonders vorteilhaft erwiesen, wenn die erste Führungsleiste in diesem Winkelbereich angeordnet wird, da sich für die meisten Werkstoffe der wirksame Hebelarm bereits deutlich reduziert und eine verbesserte Bohrungsqualität erreicht werden kann.

In einer bevorzugten Ausgestaltung der Erfindung ist der Führungsleistenwinkel für definierte Bohrparameter so gewählt, dass bei einer während des Bohrprozesses in senkrechter Richtung auf die Spanfläche an der Hauptschneidenkante wirkenden Schnittkraft eine in radialer Richtung auf die Nebenschneide wirkende Passivkraft für die definierten Bohrparameter näherungsweise zu null wird. Die Nebenschneide wird kaum noch radial belastet, was gegenüber einer bereits reduzierten Passivkraft zu einer weiteren Verbesserung der Standzeit führt. Die Neigung zu Schwingungen während des Bohrvorgangs kann durch einen entsprechend gewählten Führungsleistenwinkel ebenfalls auf ein Minimum reduziert werden, was zu einer nochmals deutlich verbesserten Bohrungsqualität führt.

Wird der Führungsleistenwinkel entsprechend der erforderlichen, definierten Bohrparameter so gewählt, dass die Passivkraft, welche in radialer Richtung auf die Nebenschneide wirkt, näherungsweise oder vollständig zu null wird, bedeutet dies, dass die Reibkräfte an der Nebenschneide ebenfalls näherungsweise zu null werden. Die Rundschlifffase kann insbesondere in diesem Fall noch als Schwingungsdämpfung nützlich sein.

Gegebenenfalls kann auf eine Rundschlifffase völlig verzichtet werden. In einer Weiterbildung der Erfindung weist die Nebenschneide des Bohrkopfes keine Rundschlifffase auf. Dies ist äußert vorteilhaft, da das spezielle Anschleifen bzw. das Schleifen der speziellen Kontur der Rundschlifffase einen hohen und kostenintensiven Fertigungsaufwand bedeutet, der somit entfallen kann. Zur Schwingungsdämpfung können eine oder mehrere weitere Führungsleisten vorgesehen sein, wobei vorzugsweise eine weitere Führungsleiste in Umfangsrichtung in etwa gleicher radialer Position wie die Schneidenecke angeordnet ist, jedoch in Vorschubrichtung hinter der Schneidenecke.

Aus dem Stand der Technik sind Bohrköpfe bekannt, bei denen eine radial nach außen bzw. innen verstellbare Schneide vorgesehen ist. Hierdurch kann der Flugkreisdurchmesser des Bohrkopfs bzw. die Mittelpunktslage des Flugkreises bei Bedarf verändert werden. Der Flugkreis ist dabei der Kreis, welcher eine resultierende Schnittkontur definiert bzw. dieser entspricht. Fallen der Mittelpunkt des Flugkreises und die Drehachse zusammen, entspricht der Flugkreis auch einem Bohrkopf-Nenndurchmesser. Nachteilig an einer verstellbaren Schneide ist jedoch, dass der Sitz der Schneide in der Regel weniger stabil ist als bei einer nicht verstellbar ausgebildeten Schneide. Ferner ist der Fertigungsaufwand für einen verstellbaren Schneidensitz deutlich höher und damit kostenintensiver als für einen festen, nicht radial verstellbaren Schneidensitz.

Bei manchen Ausführungsformen ist dagegen vorgesehen, dass für mindestens eine der Führungsleisten, insbesondere für die zweite Führungsleiste, ein radialer Abstand zwischen ihrer äußeren Anlagezone und der Drehachse einstellbar ist. Da auf die zweite Führungsleiste weniger große Kräfte wirken als auf die Schneide, ist es besonders vorteilhaft, eine Veränderung des Flugkreisdurchmessers bzw. eine veränderte Mittelpunktslage des Flugkreises durch Verändern des radialen Abstands der äußeren Anlagezone der zweiten Führungsleiste zur Drehachse zu erzeugen und nicht durch die Veränderung des radialen Abstands der Schneidenecke zur Drehachse. Wird der Abstand der zweiten Führungsleiste zur Drehachse verändert, ändert sich der durch die zwei Führungsleisten und die Schneidenecke definierte Flugkreis.

Hat man die Verstellmöglichkeit über die radiale Verstellung einer Führungsleiste, so kann die Schneide in einem festen Sitz untergebracht werden. In einer bevorzugten Ausgestaltung der Erfindung ist die Schneide in einem festen Sitz angeordnet, so dass der radiale Abstand der Schneidenecke nicht radial verstellbar ist.

Vorzugsweise ist die Schneide in einem festen Sitz angeordnet und nur für die zweite Führungsleiste ist ein radialer Abstand zwischen ihrer äußeren Anlagezone und der Drehachse einstellbar. Dadurch kann bei festem Sitz der Schneide und der ersten Führungsleiste dennoch der Flugkreisdurchmesser verstellt werden. Diese Merkmalskombination kann unabhängig von den sonstigen Merkmalen der beanspruchten Erfindung auch bei anderen Bohrköpfen vorteilhaft sein, insbesondere bei solchen mit einem Führungsleistenwinkel von mehr als 70°.

Die radiale Einstellbarkeit kann dadurch erzielt werden, dass mindestens einer der Führungsleisten eine Einstelleinrichtung zur Einstellung des radialen Abstandes zwischen ihrer äußeren Anlagezone und der Drehachse zugeordnet ist.

In einer Weiterbildung der Erfindung ist die Einstelleinrichtung der zweiten Führungsleiste zugeordnet, vorzugsweise nur der zweiten Führungsleiste.

In einer bevorzugten Ausgestaltung weist die Einstelleinrichtung mindestens eine Passplatte auf. Die Verwendung von Passplatten bietet den Vorteil, dass sie leicht austauschbar sind und besonders leicht eine definierte Veränderung des Abstandes einstellbar ist. Vorteilhaft ist die Verwendung geschraubter Führungsleisten, ggf. entsprechend dem Stand der Technik, unter die Passplatten gelegt werden, deren Länge und Breite der zugehörigen Führungsleiste entsprechen und die ähnlich wie eine Unterlegscheibe zusammen mit der Führungsleiste befestigt werden. Die Führungsleisten und Passplatten können aber auch anders am Bohrkopfkörper befestigt werden.

In einer alternativen Ausgestaltung ist eine stufenlose Einstellung des radialen Abstandes möglich. Hierzu weist eine bevorzugte Einstelleinrichtung mindestens einen Einstellkeil auf. Die Einstelleinrichtung kann aber auch eine Schraubeinrichtung oder eine Kombination aus beiden sein. Die Verwendung von Einstellkeilen und/oder einer Schraubeinrichtung hat den Vorteil, dass der radiale Abstand stufenlos einstellbar ist, wohingegen bei der Verwendung von Passplatten der Abstand nur entsprechend der Passplattendicke in Stufen einstellbar ist. Es können einer oder mehrere Einstellkeile für eine Einstellvorrichtung vorgesehen sein, die entsprechend zueinander angeordnet werden. Bei entsprechender Ausgestaltung einer Führungsleistennut oder der Führungsleiste selbst in Keilform, kann auch nur ein Keil vorgesehen sein. Denkbar ist auch, dass die Führungsleiste und die Nut zwei entgegengesetzt angeordnete Keile bilden. Allerdings sollte eine zusätzliche Fixierungseinrichtung, beispielsweise durch Schrauben, vorgesehen sein, um die Führungsleiste in ihrer Nut fixieren zu können.

In einer Weiterbildung der Erfindung weist der Bohrkopf eine Einstellvorrichtung zur Einstellung des Führungsleistenwinkels auf, vorzugsweise zur stufenlosen Einstellung. Dabei ist es vorteilhaft, wenn der Führungsleistenwinkel mindestens über einen Winkelbereich von ± 10° um einen nominalen Führungsleistenwinkel verstellt werden kann. Besonders vorteilhaft ist es, wenn ein Führungsleistenwinkel von 30° bis 70° stufenlos einstellbar ist. Der Führungsleistenwinkel kann so für unterschiedliche Bohrparameter jeweils z.B. so angepasst werden, dass die radial auf die Nebenschneide wirkende Passivkraft näherungsweise oder vollständig zu null wird oder einen anderen definierten Wert annimmt. Durch den verstellbaren Führungsleistenwinkel wird die Flexibilität des Einsatzes des Bohrkopfes für unterschiedliche Werkstoffe mit unterschiedlichen Bohrparametern deutlich erhöht. Dies bedeutet, dass die vorzuhaltende Variantenanzahl an Bohrköpfen in einem Betrieb, in dem die unterschiedlichsten Werkstoffe bearbeitet werden, reduziert werden kann, was die Investitionskosten deutlich verringert. Denkbar ist, dass für einen Verstellbereich des Führungsleistenwinkels im Bohrkopf eine Nut vorgesehen ist, die breiter als die in ihr angeordnete Führungsleiste ist und in der die Führungsleiste mittels der Einstellvorrichtung in Umfangsrichtung für den gewählten Führungsleistenwinkel fixiert werden kann. Die Einstellvorrichtung kann dabei mindestens eine Passplatte aufweisen, mindestens einen Einstellkeil und/oder andere Einstellmittel aufweisen.

In einer Weiterbildung der Erfindung weist der Bohrkopf eine mehrteilige Schneide auf, die in mehrere Teilschneiden mit jeweils einer Teilhauptschneidenkante aufgeteilt ist. Vorzugsweise ist die Schneide dabei in zwei oder drei Teilschneiden aufgeteilt, wobei die Teilschneiden eine gemeinsame Hauptschneide bilden und so angeordnet sind, dass sich die Wirkbereiche ihrer Teilhauptschneiden in radialer Richtung überlappen und ihre Gesamthauptschneidenkantenlänge größer als ein halber Bohrkopfschneidendurchmesser ist. Ist die Gesamthauptschneidenkantenlänge kleiner als der halbe Bohrkopfschneidendurchmesser, kann keine Vollbohrung erfolgen, da nicht über den gesamten Bohrungsdurchmesser Material entfernt werden kann. Tiefbohrwerkzeuge bzw. Tiefbohrköpfe zum Tiefbohren mit einer aufgeteilten Schneide sind besonders bei größeren Bohrungsdurchmessern vorteilhaft. Es können auch Schneideinsätze aus unterschiedlichen Schneidwerkstoffen bzw. mit unterschiedlichen Schneidwerkstoffen beschichtete Schneideinsätze verwendet werden. Es ist möglich, den Schneidwerkstoff in Abhängigkeit der Belastung der jeweiligen Teilschneide zu wählen.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können.

### KURZBESCHREIBUNG DER ZEICHNUNGEN

Ausführungsbeispiele der Erfindung sind in den Zeichnungen schematisch dargestellt und werden im Folgenden näher erläutert. In den Zeichnungen zeigen:
- Fig. 1: eine Ausführungsform eines Bohrkopfs in perspektivischer Darstellung mit einer zweigeteilten Schneide,
- Fig. 2: eine Ansicht auf die Bohrseite eines Bohrkopfes aus dem Stand der Technik mit einer einteiligen Schneide,
- Fig. 3: eine Ansicht auf die Bohrseite des Bohrkopfes aus Fig. 1,
- Fig. 4: eine Ansicht auf die Bohrseite eines Bohrkopfes in einer alternativen Ausführungsform mit einer einteiligen Schneide,
- Fig. 5: eine Ansicht auf die Bohrseite eines Bohrkopfes in einer anderen Ausführungsform mit einem einstellbaren Führungsleistenwinkel, und
- Fig. 6: eine andere perspektivische Darstellung des Bohrkopfes aus Fig. 1 mit einer schematischen Detaildarstellung des äußeren Bereichs der Schneide.

### DETAILLIERTE BESCHREIBUNG DER BEVORZUGTEN AUSFÜHRUNGSFORMEN

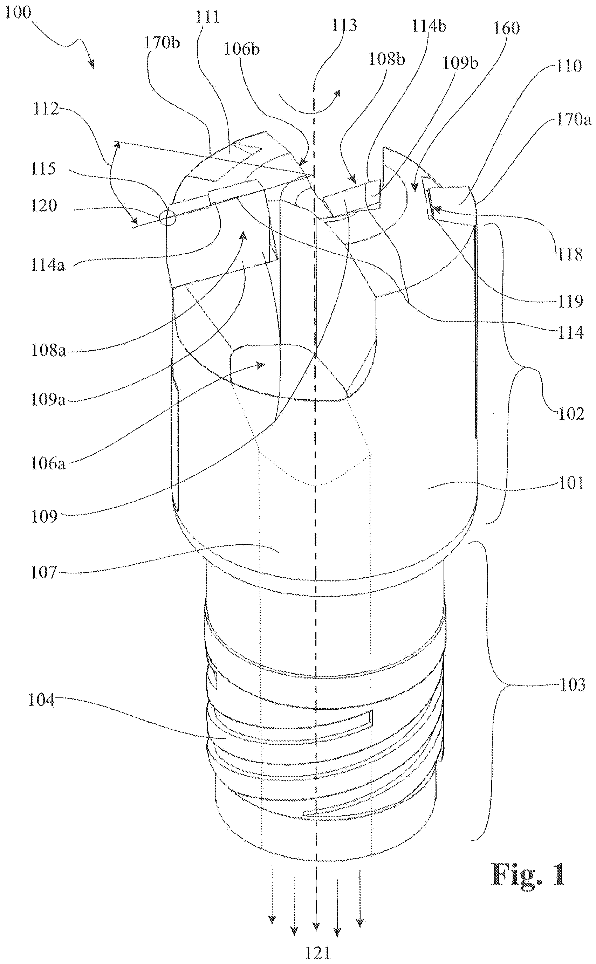

In Fig. 1 ist in perspektivischer Darstellung ein Ausführungsbeispiel eines Bohrkopfes 100 mit einer in zwei Teilschneiden 109a und 109b aufgeteilten Schneide 109 dargestellt. Der gezeigte Bohrkopf 100 weist einen um eine Drehachse 113 drehbaren und im wesentlichen zylindrischen Bohrkopfkörper 101 mit einem Bohrbereich 102 sowie einem Schaftbereich 103 auf. Der Schaftbereich 103 ist zur Verbindung mit einem hier nicht dargestellten Bohrrohr ausgebildet. Für das gezeigte Ausführungsbeispiel ist zur Anbindung des Bohrkopfes 100 an das Bohrrohr ein spezielles Anschlussgewinde 104 vorgesehen. Dies kann ein gebräuchliches eingängiges oder viergängiges Anschlussgewinde für BTA-Bohrköpfe sein. Bei sehr kleinen Bohrdurchmessern im Bereich von ca. 7 mm bis 12 mm kann der Bohrkopf auch direkt in das Bohrrohr eingearbeitet sein. Bei großen Tiefbohrwerkzeugen kann der Bohrkopf auch angeflanscht werden.

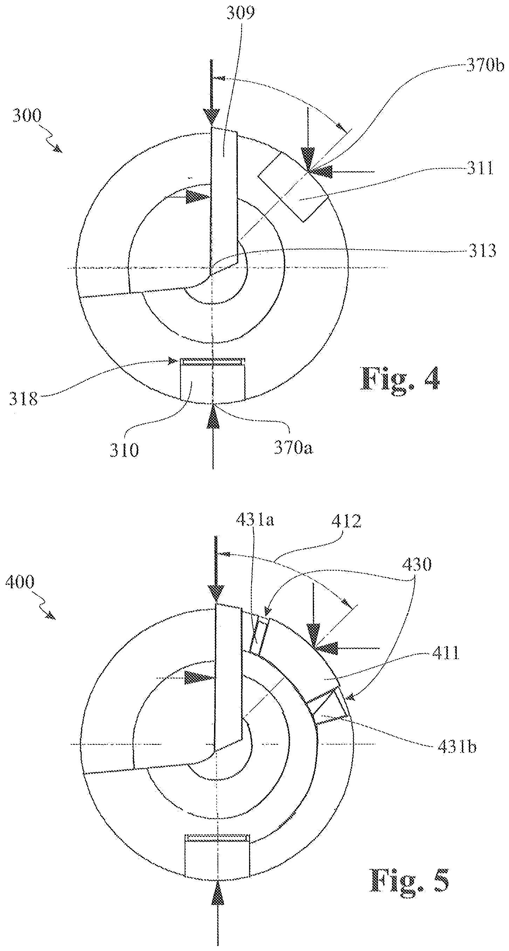

Die Schneide 109 mit ihren beiden Teilschneiden 109a und 109b, welche eine Außenschneide 109a bzw. eine Innenschneide 109b bilden, ist an einer Bohrseite 160 des Bohrkopfkörpers 101 angeordnet. Ein erfindungsgemäßer Bohrkopf kann auch mehrere Schneiden oder eine einteilige Schneide aufweisen, wie in den Fig. 4 und 5 dargestellt. Die Schneide kann auch in mehr als zwei Teilschneiden und aufgeteilt sein, beispielsweise in drei Teilschneiden. Für ein Tiefbohrwerkzeug charakteristisch ist jedoch, wie in den Fig. 1 bis 6 dargestellt, eine unsymmetrische Anordnung der Schneide 109 bzw. der Teilschneiden 109a und 109b zur Drehachse 113. Dabei entstehen während des Bohrvorganges unsymmetrisch auf den Bohrkopf 100 bzw. das gesamte Tiefbohrwerkzeug wirkende Kräfte, die später noch näher erläutert werden.

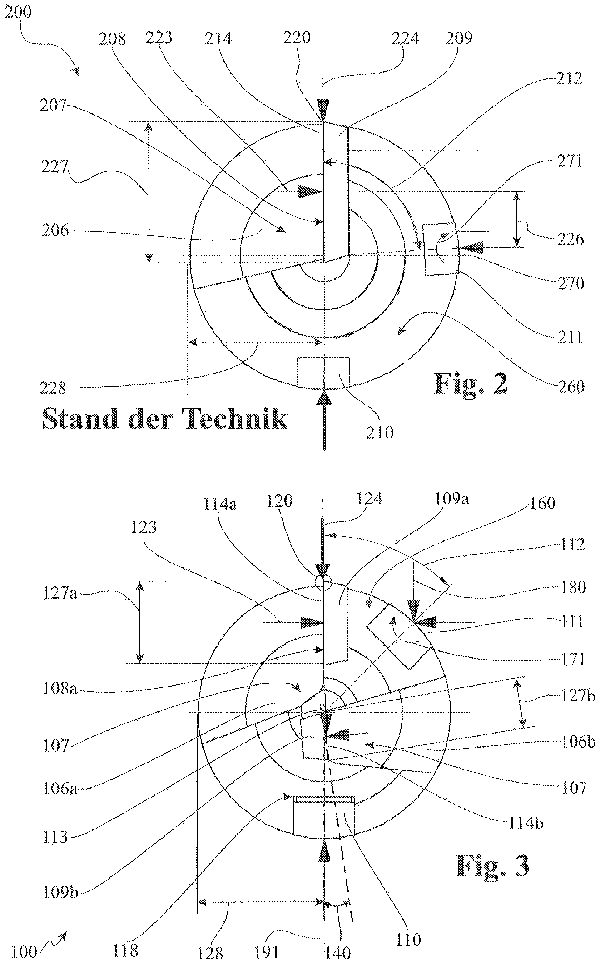

Beim Bohrvorgang wird durch einen Schneidkeil an der Hauptschneide 114 bzw. deren Hauptschneidenkanten 114a und 114b und der Nebenschneide bzw. deren Nebenschneidenkante 115 Material vom zu bearbeitenden Werkstück abgetrennt. Die Hauptschneidenkante 114a und die Nebenschneidenkante 115 der Außenschneide 109a bilden eine Schneidenecke 120, die über den Bohrkopfkörper 101 radial nach außen übersteht. Des Weiteren spannen die Hauptschneidenkante 114a und die Nebenschneidenkante 115 der Außenschneide 109a eine Spanfläche 108a auf. Entsprechend wird die Spanfläche 108b der Innenschneide 109b gebildet. Durch den Schneidkeil der Innenschneide 109b wird ebenfalls ein Span erzeugt. In dem dargestellten Ausführungsbeispiel verläuft die Hauptschneidenkante 114a der Außenschneide 109a in radialer Richtung im wesentlichen in einer durch die Drehachse verlaufenden Längsmittelebene des Bohrkopfes, was in Fig. 3 sehr deutlich zu erkennen ist. Die Hauptschneidenkante 114a verläuft jedoch nicht rechtwinklig zur Drehachse in einer radialen Ebene, sondern schräg in axialer Richtung von außen nach innen in Vorschubrichtung mit einem Anstellwinkel.

Die in Fig. 1 dargestellte Ausführungsform weist ferner eine angrenzend an die Spanfläche 108a der Außenschneide 109a angeordnete Spänesammelöffnung 106a sowie eine an die Spanfläche 108b angrenzende Spänesammelöffnung 106b auf. Gut zu erkennen ist ein im Inneren des Bohrkopfes 100 bzw. im Inneren des Bohrkopfkörpers 101 von der Bohrseite 160 durch den Schaftbereich 103 verlaufender Hohlraumkanal 107 zur Späne- und Kühlschmierstoffrückführung. Die von den jeweiligen Teilschneiden erzeugten Späne werden vom Schneidkeil abgeführt, indem sie über die jeweilige Spanfläche 108a bzw. über die Spanfläche 108b in die jeweils zugehörige Spänesammelöffnung 106a bzw. 106b abgleiten und von dort gemeinsam mit einem den Bohrkopf 100 umspülenden Kühlschmierstoff in den Hohlraumkanal 107 geleitet werden.

Am Austritt des Bohrkopfes 100 wird dieses Späne-Kühlschmierstoff-Gemisch 121 in ein hier nicht dargestelltes angeschlossenes Bohrrohr weitergeleitet bis zu einer Austrittsöffnung. Wichtig ist, dass eine verstopfungsfreie Rückführung der Späne und des Kühlschmierstoffes gewährleistet ist.

Der in dieser Abbildung gezeigte Bohrkopf 100 ist prinzipiell sowohl zum BTA-Tiefbohren als auch zum Ejektor-Tiefbohren geeignet. Es muss lediglich sichergestellt werden, dass der Bohrkopf mit dem entsprechend ausgebildeten Bohrrohr verbunden werden kann, und dass eine Kühlschmierstoffzufuhr entsprechend sichergestellt ist.

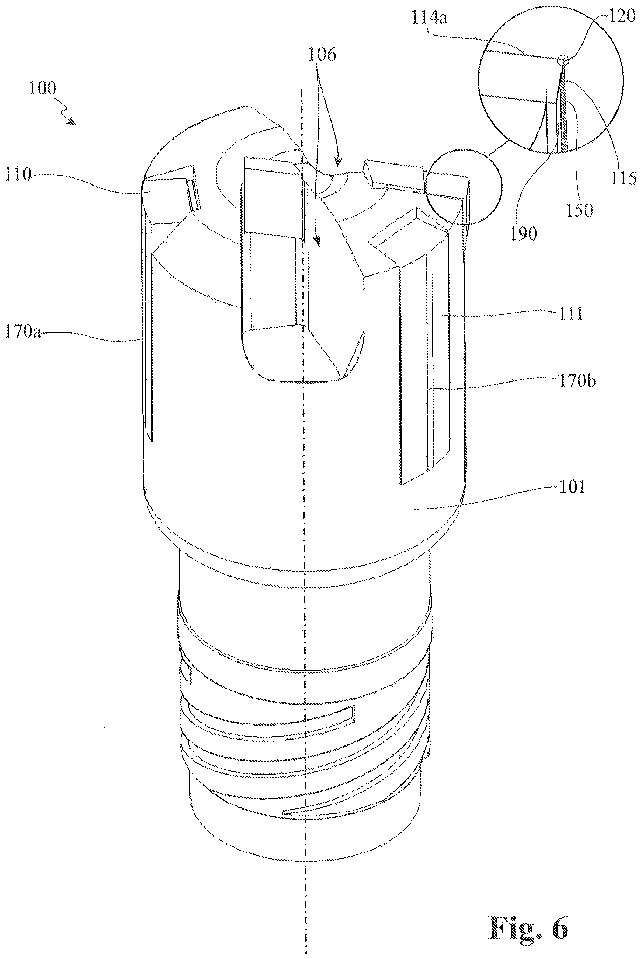

Die Führungsleisten 110 und 111 weisen jeweils eine äußere Anlagezone bzw. Kontaktzone 170a bzw. 170b auf, welche in Fig. 6 gut zu erkennen ist. Diese Anlagezonen 170a und 170b sind jeweils zur Anlage an der Innenwand der Bohrung vorgesehen und dafür ausgebildet. Dabei ist es besonders vorteilhaft, wenn die Führungsleisten 110 und 111 speziell geschliffen sind, um eine Reibkraft zwischen den Führungsleisten 110 und 111 und der Innenwand der Bohrung zu minimieren.

Zur Führung in der Bohrung ist neben den Führungsleisten 110 und 111 mit ihren äußeren Anlagezonen 170a und 170b die Außenschneide 109a, die einen ersten Anlagebereich mit ihrer Schneidenecke 120 bildet, vorgesehen. Dabei ist in dem gezeigten Ausführungsbeispiel eine der Führungsleisten exakt diametral gegenüberliegend von der Schneidenecke 120 angeordnet, also in einem Winkel von 180° zur Schneidenecke 120. Diese Führungsleiste wird als zweite Führungsleiste 110 bezeichnet und stützt die im Wesentlichen radial auf die Schneide 109 wirkenden Kräfte ab, siehe Fig. 3. Die andere Führungsleiste 111 wird als erste Führungsleiste bezeichnet und stützt zum einen tangential wirkende Kräfte ab und zum anderen radiale Kräfte, und entlastet somit die Nebenschneide, siehe ebenfalls Fig. 3. Die erste Führungsleiste 111 ist dabei in einer von der Spanfläche 108a der Außenschneide 109a abgewandten Umfangshälfte des Bohrkopfkörpers 101 bzw. des Bohrkopfes 100 angeordnet, um unter anderem die tangential auf die Außenschneide 109a wirkende Schnittkraft 113 abzustützen.

In dieser Abbildung ist gut zu erkennen, wie der Führungsleistenwinkel 112 definiert ist. Er wird durch eine erste, durch die Schneidenecke 120 und die Drehachse 113 radial verlaufende Gerade und einer zweite, ebenfalls durch die Drehachse 113 radial verlaufende Gerade gebildet. Dabei verläuft die zweite Gerade orthogonal zu einer Tangente, welche ihren Berührpunkt im theoretischen Anlagepunkt der äußeren Anlagezone 170 der ersten Führungsleiste 111 an der Innenwand der Bohrung hat. Die Geraden liegen dabei in einer zur Drehachse 113 senkrechten Ebene, wobei die Schneidenecke 120 ebenfalls in dieser Ebene liegt. Der Scheitelpunkt des Führungsleistenwinkels 112 ergibt sich aus dem Schnittpunkt der beiden Geraden und liegt auf der Drehachse 113.

In diesem Ausführungsbeispiel ist die erste Führungsleiste 111 um einen Führungsleistenwinkel 112 von ca. 45° versetzt zur Schneidenecke 120 angeordnet. Der Führungsleistenwinkel 112 kann aber auch 30° oder 70° betragen oder dazwischen liegen, wobei er nicht oberhalb von 70° liegen sollte. Er ist im wesentlichen abhängig von der Schneidengeometrie und deren Anordnung sowie vom zu zerspanenden Werkstoff, welcher maßgeblich die erforderlichen Bohrparameter determiniert.

Zur Veränderung des radialen Abstandes der äußeren Anlagezone 170a der zweiten Führungsleiste 110 von der Drehachse 113 der Bohrkopf 100 eine Einstelleinrichtung 118 auf. Die Einstelleinrichtung 118 hat eine Passplatte 119, es können zur Veränderung des radialen Abstandes der äußeren Anlagezone 170a aber auch mehrere Passplatten 119 unterhalb der Führungsleiste 110 übereinander angeordnet werden oder Passplatten unterschiedlicher Dicke. Denkbar ist auch, statt Passplatten Einstellkeile zu verwenden. Vorteilhaft werden dabei zwei Einstellkeile entgegengesetzt angeordnet, vgl. dazu Bauteil 431b in Fig. 5. Der radiale Abstand kann dann durch Zusammen- oder Auseinanderschieben der beiden Keile stufenlos eingestellt werden. Die Einstelleinrichtung 118 kann aber auch für die erste Führungsleiste 111 oder für beide Führungsleisten 110 und 111 vorgesehen sein und/oder auch für andere Stütz- und/oder Hilfsleisten. Vorzugsweise ist sie nur für die zweite Führungsleiste 110 vorgesehen.

In Fig. 2 ist zum besseren Verständnis ein BTA-Tiefbohrkopf 200 aus dem Stand der Technik in einer Ansicht von der Bohrseite mit einer einteiligen Schneide 209 dargestellt. Anhand dieser Darstellung lässt sich das Problem aus dem Stand der Technik bekannter BTA-Tiefbohrköpfe bzgl. der auftretenden Belastung an der Nebenschneide und dem daraus resultierenden Verschleiß an der Nebenschneide und entsprechend reduzierten Standzeiten gut nachvollziehen. Die Abbildung zeigt die senkrecht auf der Spanfläche 208 stehende, auf die Hauptschneidenkante 214 wirkende Schnittkraft 223 sowie die Anordnung der Führungsleisten 210 und 211 im Verhältnis zur Schneide 209 bzw. der Schneidenecke 220. Die erste Führungsleiste 211 ist um einen Führungsleistenwinkel 212 von ca. 88° zur Schneidenecke 220 versetzt in einer von der Spanfläche 208 abgewandten Umfangshälfte des Bohrkopfes 200 angeordnet. Die zweite Führungsleiste 210 ist genau diametral gegenüber der Schneidenecke 220 angeordnet. Die Spanabfuhr erfolgt über eine Spänesammelöffnung 206 und von dort in den Hohlraumkanal 207. Da nur eine ungeteilte Schneide 209 vorgesehen ist, wird auch nur eine Spänesammelöffnung 206 benötigt. Ferner zeigt die Abbildung eine Gesamthauptschneidenkantenlänge 227, die größer ist als ein Bohrungs-Nennradius 228, was erforderlich ist, um Material über den gesamten Bohrungsdurchmesser abzutragen und keinen Kern stehen zu lassen. Gut zu erkennen ist in dieser Darstellung ein wirksamer Hebelarm 226, mit dem die Schnittkraft 223 ein Kippmoment 271 um die Anlagezone 270 der ersten Führungsleiste 211 erzeugt. Damit entsteht eine Abstützkraft bzw. eine Passivkraft 224 an der Nebenschneide bzw. der Schneidenecke 220.

In Fig. 3 ist eine Ansicht auf die Bohrseite 160 des Bohrkopfes 100 aus Fig. 1 dargestellt. In dieser Darstellung ist gut zu erkennen, dass bei einer Anordnung der ersten Führungsleiste 111 in einem Führungsleistenwinkel 112 zur Schneidenecke 120 von weniger als 70°, z. B. bei etwa 45°, ein wirksamer Hebelarm für eine entsprechende resultierende Schnittkraft 123 je nach gewählten Bohrparametern deutlich reduziert werden kann im Vergleich zum Stand der Technik, siehe Fig. 2. Dies bedeutet, dass durch die Wahl eines entsprechenden Führungsleistenwinkels 112 in Abhängigkeit der während des Bohrvorgangs wirkenden Kräfte, eine radial auf die hier nicht erkennbar dargestellte Nebenschneide wirkende Passivkraft 124 nahezu auf null eingestellt werden kann. Die Abstützkraft wird somit im wesentlichen auf die beiden Führungsleisten 110 und 111 verteilt. Dabei nimmt die erste Führungsleiste 111 sowohl tangential wirkende Kräfte auf, wie beispielsweise die Schnittkraft 123 als auch radial wirkende Kräfte bezogen auf die Nebenschneide, wie hier anhand der Kraft 180 dargestellt. Wird der Führungsleistenwinkel 112 noch kleiner gewählt, kann, je nach den während des Bohrprozesses wirkenden Kräften, sogar ein linksdrehendes Kippmoment erzeugt werden.

In dieser Darstellung ist erkennbar, dass die Innenschneide 109b eine zur Durchmesserlinie 191 um einen Winkel 140 verdreht orientierte Innen-Hauptschneidenkante 114b aufweist. Die Innen-Hauptschneidenkante 114b kann aber auch entlang der Durchmesserlinie 191 orientiert sein. Eine Orientierung der Innen-Hauptschneidenkante 114b schräg zur Durchmesserlinie 191 kann günstig sein zur Beeinflussung der Führungsleistenbelastung. Die Außen-Hauptschneidenkante 114a und die Innen-Hauptschneidenkante 114b bilden gemeinsam aus der Summe ihrer Einzellängen 127a und 127b die Gesamthauptschneidenkantenlänge, die ebenfalls größer als der Bohrungs-Nennradius 128 sein sollte. Des Weiteren sind in Fig. 3 auch jeweils die zwei Spänesammelöffnungen 106a und 106b, die beide in einen gemeinsamen Hohlraumkanal 107 führen, gut zu erkennen. Die in dieser Abbildung gezeigte Ausführungsform weist ebenfalls eine Einstelleinrichtung 118 für die Veränderung des radialen Abstandes der äußeren Anlagezone 170 der Führungsleiste 110 zur Drehachse 113 auf.

In Fig. 4 ist ein alternatives Ausführungsbeispiel eines Bohrkopfes 300 in einer Ansicht auf die Bohrseite dargestellt. Im Gegensatz zu dem in Fig. 1 gezeigten Ausführungsbeispiel weist dieser Bohrkopf 300 eine einteilige Schneide 309 auf. Die gezeigte Ausführungsform weist ebenfalls eine Einstelleinrichtung 318 für die Veränderung des radialen Abstandes der äußeren Anlagezone 370a der zweiten Führungsleiste 310 zur Drehachse 313 auf.

Fig. 5 zeigt eine weitere Ausführungsform eines Bohrkopfes 400 in einer Ansicht auf die Bohrseite. In dieser Ausführungsform ist der Führungsleistenwinkel 412 der ersten Führungsleiste 411 zumindest über einen definierten Winkelbereich einstellbar, vorzugsweise stufenlos. Dies wird durch eine Einstellvorrichtung 430 erreicht. Diese Einstellvorrichtung kann als Einstellmittel eine Passplatte 431a und/oder auch Einstellkeile 431b aufweisen. Einstellkeile 431b eignen sich besonders für eine stufenlose Verstellung des Führungsleistenwinkel 412. Die dargestellten Einstellmittel können auch kombiniert werden oder es kann nur ein Keil vorgesehen sein. Denkbar ist auch die Anordnung der ersten Führungsleiste 411 auf einer in Umfangsrichtung angeordneten und wirkenden Gleitschiene, auf der die erste Führungsleiste 411 geführt ist und mit einem definierten Führungsleistenwinkel 412 durch eine Schraube oder dergleichen fixiert werden kann. Wichtig dabei ist, dass die erste Führungsleiste 411 während des Bohrvorgangs so fixiert und positioniert ist, dass sie die wirkenden Kräfte sicher abstützen kann und sich nicht verschiebt oder verdreht oder ähnliches. Besonders vorteilhaft ist es, wenn die erste Führungsleiste 411 um ca. ± 10°, wenn möglich auch mehr, in Umfangsrichtung verstellt werden kann, so dass mit demselben Bohrkopf 400 mit einem nominalen Führungsleistenwinkel 412 von 45° auch Führungsleistenwinkel 412 von 35° bis 55° stufenlos einstellbar sind, insbesondere Führungsleistenwinkel 412 von 30° bis 70°.

Analog zu der hier schematisch dargestellten Wirkweise der Keile, mit denen eine stufenlose Winkelverstellung möglich ist, können die Keile auch nach diesem Prinzip auch als Einstellmittel für die Veränderung des radialen Abstandes der äußeren Anlagezone der Führungsleiste 410 eingesetzt werden.

In Fig. 6 ist der Bohrkopf 100 aus Fig. 1 aus einer anderen Richtung perspektivisch dargestellt mit einer detaillierten Darstellung der Schneidenecke 120. Die Abbildung zeigt die Anordnung der Führungsleisten 110 und 111 parallel zur Drehachse 113 außen am Bohrkopfkörper 101. In der Detaildarstellung ist die Schneidenecke 120 gut zu erkennen, die durch die Hauptschneidenkante 114a und die Nebenschneidenkante 115 der Außenschneide 109a gebildet wird. An der Nebenschneidenkante 115 grenzt ein Bereich 150 an, der bei den aus dem Stand der Technik bekannten BTA-Bohrköpfen üblicherweise in Form einer Rundschlifffase geschliffen ist, die ähnlich wie die äußeren Anlagezonen 170 bzw. 370 der Führungsleisten 110, 111 einen geschliffenen Radius aufweist.

Bei dem dargestellten Bohrkopf 100 ist in diesem Bereich 150 jedoch keine Rundschlifffase vorgesehen. Bei entsprechender Ausgestaltung des Bohrkopfes, kann die Rundschlifffase auch für andere Ausführungsformen als in den hier gezeigten Ausführungsbeispielen entfallen.

Die gezeigten Ausführungsformen weisen nur zwei Führungsleisten auf, es können weitere Führungsleisten oder andere Stütz- und/oder Hilfsleisten vorgesehen sein. Bevorzugt ist zur Schwingungsdämpfung eine weitere Führungsleiste achsparallel in Umfangsrichtung an etwa gleicher radialer Position wie die Schneidenecke angeordnet, jedoch in Vorschubrichtung hinter der Schneide.

## Patentansprüche

1. Bohrkopf (100, 300, 400) für ein Tiefbohrwerkzeug zum BTA/STS-oder Ejektor-Tiefbohren mit:
einem um eine Drehachse (113, 313) drehbaren Bohrkopfkörper (101), der eine einzige Bohrseite (160) und einen Hohlraumkanal (107) im Inneren für eine Späne- und Kühlschmierstoffrückführung mit mindestens einer Spänesammelöffnung (106) an der Bohrseite (160) aufweist;
einer an der Bohrseite (160) angeordneten Schneide (109, 309), die eine Hauptschneide mit einer Hauptschneidenkante (114) und eine Nebenschneide mit einer Nebenschneidenkante (115) aufweist, wobei die Nebenschneide an einer radialen Außenseite der Schneide angeordnet ist und die Hauptschneidenkante (114) und die Nebenschneidenkante (115) eine Schneidenecke (120) bilden und eine Spanfläche (108) aufspannen, die angrenzend an der Spänesammelöffnung (106) angeordnet ist; und
Führungsleisten (110, 111, 310, 311, 410, 411), wobei eine erste Führungsleiste (111, 311, 411) um einen in Umfangsrichtung des Bohrkopfes (100, 300, 400) gemessenen Führungsleistenwinkel (112, 412) versetzt zur Schneidenecke (120) in einer von der Spanfläche (108) abgewandten Umfangshälfte des Bohrkopfkörpers (101) angeordnet ist und eine zweite Führungsleiste (110, 310, 410) diametral gegenüberliegend von der Schneidenecke (120) angeordnet ist,
**dadurch gekennzeichnet, dass** der Führungsleistenwinkel (112, 412) weniger als 70° beträgt.

2. Bohrkopf (100, 300, 400) nach Anspruch 1, **dadurch gekennzeichnet, dass** der Führungsleistenwinkel (112, 412) 30° bis 70° beträgt, vorzugsweise 40° bis 60°.

3. Bohrkopf (100, 300, 400) nach Anspruch 1 oder 2, **dadurch gekennzeichnet, dass** für definierte Bohrparameter der Führungsleistenwinkel (112, 412) so gewählt ist, dass bei einer während des Bohrprozesses in senkrechter Richtung auf die Spanfläche (108) an der Hauptschneidenkante (114) wirkenden Schnittkraft (123) eine in radialer Richtung auf die Nebenschneide wirkende Passivkraft (124) näherungsweise zu Null wird.

4. Bohrkopf (100, 300, 400) nach einem der vorhergehenden Ansprüche, **dadurch gekennzeichnet, dass** die Nebenschneide (115) keine Rundschlifffase aufweist.

5. Bohrkopf (100, 300, 400) nach einem der vorgenannten Ansprüche, **dadurch gekennzeichnet, dass** die Schneide (109, 309) in einem festen Sitz angeordnet ist.

6. Bohrkopf (100, 300, 400) nach einem der vorgenannten Ansprüche, **dadurch gekennzeichnet, dass** mindestens einer der Führungsleisten (110, 111, 310, 311, 410, 411) eine Einstelleinrichtung (118, 318) zur Einstellung eines radialen Abstandes zwischen ihrer äußeren Anlagezone (170a, 170b, 370a, 370b) und der Drehachse (113, 313) zugeordnet ist.

7. Bohrkopf (100, 300, 400) nach Anspruch 6, **dadurch gekennzeichnet, dass** die Einstelleinrichtung der zweiten Führungsleiste (110, 310, 410) zugeordnet ist, wobei vorzugsweise nur der zweiten Führungsleiste (110, 310, 410) eine Einstelleinrichtung zugeordnet ist.

8. Bohrkopf (100, 300, 400) nach Anspruch 6 oder 7, **dadurch gekennzeichnet, dass** die Einstelleinrichtung (118, 318) mindestens eine Passplatte (119) aufweist.

9. Bohrkopf (100, 300, 400) nach Anspruch 6 oder 7, **dadurch gekennzeichnet, dass** die Einstelleinrichtung (118, 318) für eine stufenlose Einstellung des radialen Abstandes ausgebildet ist, wobei die Einstelleinrichtung (118, 318) vorzugsweise mindestens einen Einstellkeil aufweist.

10. Bohrkopf (400) nach einem der vorgenannten Ansprüche, **dadurch gekennzeichnet, dass** der Bohrkopf (400) eine Einstellvorrichtung (430) zur Einstellung des Führungsleistenwinkels (412) aufweist, vorzugsweise zur stufenlosen Einstellung.

11. Bohrkopf (100) nach einem der vorgenannten Ansprüche, **dadurch gekennzeichnet, dass** die Schneide (109) in mehrere Teilschneiden (109a, 109b) mit jeweils einer Teilhauptschneidenkante (114a, 114b) aufgeteilt ist, vorzugsweise in zwei oder drei Teilschneiden, wobei die Teilhauptschneidenkanten (114a, 114b) eine gemeinsame Hauptschneidenkante (114) bilden und so angeordnet sind, dass sich die Wirkbereiche ihrer Teilhauptschneidkanten (114a, 114b) in radialer Richtung überlappen und ihre Gesamthauptschneidenkantenlänge größer als ein halber Bohrkopf-Nenndurchmesser (128) ist.

12. Tiefbohrwerkzeug zum BTA-Tiefbohren, insbesondere zum Ejektor-Tiefbohren, **dadurch gekennzeichnet, dass** das Tiefbohrwerkzeug einen Bohrkopf (100, 300, 400) nach einem der Ansprüche 1 bis 11 aufweist.

## Claims

1. Drill head (100, 300, 400) for a deep hole drilling tool for BTA/STS or ejector deep hole drilling, with:
a drill head body (101) which is rotatable about an axis of rotation (113, 313) and which has a single drilling side (160) and, inside, a cavity duct (107) for chip and cooling lubricant return with at least one chip collecting orifice (106) on the drilling side (160);
a cutting edge (109, 309), which is arranged on the drilling side (160) and which has a main cutting edge with a main cutting edge cant (114) and a secondary cutting edge with a secondary cutting edge cant (115), the secondary cutting edge being arranged on a radial outside of the cutting edge, and the main cutting edge cant (114) and the secondary cutting edge cant (115) forming a cutting edge corner (120) and spanning a rake (108) which is arranged contiguously to the chip collecting orifice (106); and
guide pads (110, 111, 310, 311, 410, 411), a first guide pad (111, 311, 411) being arranged, offset to the cutting edge corner (120) by the amount of a guide pad angle (112, 412) measured in the circumferential direction of the drill head (100, 300, 400), in a circumferential half, facing away from the rake (108), of the drill head body (101), and a second guide pad (110, 310, 410) being arranged diametrically opposite the cutting edge corner (120),
**characterized in that** the guide pad angle (112, 412) amounts to less than 70°.

2. Drill head (100, 300, 400) according to claim 1, **characterized in that** the guide pad angle (112, 412) amounts to 30° to 70°, preferably 40° to 60°.

3. Drill head (100, 300, 400) according to claim 1 or 2, **characterized in that**, for defined drilling parameters, the guide pad angle (112, 412) is selected such that, in the case of a cutting force (123) acting perpendicularly upon the rake (108) on the main cutting edge cant (114) during the drilling process, a passive force (124) acting upon the secondary cutting edge in the radial direction becomes approximately zero.

4. Drill head (100, 300, 400) according to any of the preceding claims, **characterized in that** the secondary cutting edge (115) has no circular-ground chamfer.

5. Drill head (100, 300, 400) according to any of the preceding claims, **characterized in that** the cutting edge (109, 309) is arranged in a firm fit.

6. Drill head (100, 300, 400) according to any of the preceding claims, **characterized in that** at least one of the guide pads (110, 111, 310, 311, 410, 411) is assigned a setting device (118, 318) for setting a radial spacing between its outer bearing zone (170a, 170b, 370a, 370b) and the axis of rotation (113, 313).

7. Drill head (100, 300, 400) according to claim 6, **characterized in that** the setting device is assigned to the second guide pad (110, 310, 410), wherein preferably only the second guide pad (110, 310, 410) is assigned a setting device.

8. Drill head (100, 300, 400) according to claim 6 or 7, **characterized in that** the setting device (118, 318) has at least one locating plate (119).

9. Drill head (100, 300, 400) according to claim 6 or 7, **characterized in that** the setting device (118, 318) is designed for continuous setting of the radial spacing, wherein the setting device (118, 318) preferably has at least one setting wedge.

10. Drill head (400) according to any of the preceding claims, **characterized in that** the drill head (400) has a setting device (430) for setting the guide pad angle (412), preferably for continuous setting.

11. Drill head (100) according to any of the preceding claims, **characterized in that** the cutting edge (109) is divided into a plurality of partial cutting edges (109a, 109b), each with a partial main cutting edge cant (114a, 114b), preferably into two or three partial cutting edges, the partial main cutting edge cants (114a, 114b) forming a common main cutting edge cant (114) and being arranged such that the active regions of their partial main cutting edge cants (114a, 114b) overlap in the radial direction and their overall main cutting edge cant length is greater than half the drill head nominal diameter (128).

12. Deep hole drilling tool for BTA deep hole drilling, in particular for ejector deep hole drilling, **characterized in that** the deep hole drilling tool has a drill head (100, 300, 400) according to any of claims 1 to 11.

## Revendications

1. Tête de forage (100, 300, 400) pour outil de forage à BTA/STS ou éjecteur, la tête de forage présentant :
un corps (101) de tête de forage apte à tourner autour d'un axe de rotation (113, 313), qui présente un seul côté de forage (160) et un canal creux (107) prévu à l'intérieur pour renvoyer les éclats et le lubrifiant-agent de refroidissement et qui présente au moins une ouverture (106) de collecte d'éclats située sur le côté de forage (160),
une lame (109, 309) disposée sur le côté de forage (160) et présentant une lame principale dotée d'une arête (114) de lame principale et une lame secondaire doté d'une arête (115) de lame secondaire, la lame secondaire étant disposée sur un côté radialement extérieur de la lame, l'arête (114) de la lame principale et l'arête (115) de la lame secondaire formant un sommet de coupe (120) et sous-tendant une surface de coupe (108) disposée en position adjacente à l'ouverture (106) de collecte d'éclats et
des nervures de guidage (110, 111, 310, 311, 410, 411),
une première nervure de guidage (111, 311, 411) étant décalée par rapport au sommet de coupe (120) d'un angle (112, 412) de nervure de guidage mesuré dans la direction périphérique de la tête de forage (100, 300, 400), dans une moitié de la périphérie, non tournée vers la surface de coupe (108), du corps (101) de tête de forage et
une deuxième nervure de guidage (110, 310, 410) étant disposée en position diamétralement opposée à l'arête de coupe (120),
**caractérisée en ce que**
l'angle (112, 412) de nervure de guidage est inférieur à 70°.

2. Tête de forage (100, 300, 400) selon la revendication 1, **caractérisée en ce que** l'angle (112, 412) de nervure de guidage est de 30° à 70° et de préférence de 40° à 60°.

3. Tête de forage (100, 300, 400) selon les revendications 1 ou 2, **caractérisée en ce que** pour des paramètres de forage définis, l'angle (112, 412) de nervure de guidage est défini de telle sorte que lorsque la force de coupe (123) agit sur l'arête (114) de la lame principale dans une direction perpendiculaire à la surface de coupe (108) pendant l'opération de forage, une force passive (124) agissant dans la direction radiale sur la lame secondaire est sensiblement nulle.

4. Tête de forage (100, 300, 400) selon l'une des revendications précédentes, **caractérisée en ce que** la lame secondaire (115) ne présente pas de chanfrein arrondi de meulage.

5. Tête de forage (100, 300, 400) selon l'une des revendications précédentes, **caractérisée en ce que** la lame (109, 309) est disposée dans un siège fixe.

6. Tête de forage (100, 300, 400) selon l'une des revendications précédentes, **caractérisée en ce qu'**un dispositif d'ajustement (118, 318) qui ajuste la distance radiale entre la zone extérieure d'appui (170a, 170b, 370a, 370b) et l'axe de rotation (113, 313) est associé à au moins l'une des nervures de guidage (110, 111, 310, 311, 410, 411).

7. Tête de forage (100, 300, 400) selon la revendication 6, **caractérisée en ce que** le dispositif d'ajustement est associé à la deuxième nervure de guidage (110, 310, 410), un dispositif d'ajustement étant associé de préférence uniquement à la deuxième nervure de guidage (110, 310, 410).

8. Tête de forage (100, 300, 400) selon les revendications 6 ou 7, **caractérisée en ce que** le dispositif d'ajustement (118, 318) présente au moins une plaque d'ajustement (119).

9. Tête de forage (100, 300, 400) selon les revendications 6 ou 7, **caractérisée en ce que** le dispositif d'ajustement (118, 318) est configuré pour ajuster de manière progressive la distance radiale, le dispositif d'ajustement (118, 318) présentant de préférence au moins un biseau d'ajustement.

10. Tête de forage (400) selon l'une des revendications précédentes, **caractérisée en ce que** la tête de forage (400) présente un ensemble d'ajustement (430) qui ajuste l'angle (412) de nervure de guidage, de préférence dans un ajustement progressif.

11. Tête de forage (100) selon l'une des revendications précédentes, **caractérisée en ce que** la lame (109) est divisée en plusieurs lames partielles (109a, 109b) qui présentent chacune une arête (114a, 114b) de lame principale partielle, de préférence en deux ou trois lames partielles, les arêtes (114a, 114b) des lames principales partielles formant une arête commune (114) de lame principale et étant disposés de telle sorte que les plages d'action de leurs arêtes (114a, 114b) de lame principale partielle se superposent dans la direction radiale et que la totalité de leur longueur d'arête de lame principale soit supérieure à la moitié du diamètre nominal (128) de la tête de forage.

12. Outil pour le forage BTA, en particulier pour le forage à éjecteur, **caractérisé en ce que** l'outil de forage présente une tête de forage (100, 300, 400) selon l'une des revendications 1 à 11.
